# EUROPÄISCHE PATENTSCHRIFT

(11) **EP 3 921 524 B1**
(45) Veröffentlichungstag und Bekanntmachung des Hinweises auf die Patenterteilung: **18.09.2024**
(21) Anmeldenummer: 20703190.7
(22) Anmeldetag: 30.01.2020
(51) Int. Cl.: F02C 3/055, F02C 7/06, F04C 18/16

(54) **MASCHINE ZUM ENTSPANNEN ODER KOMPRIMIEREN VON GASFÖRMIGEN MEDIEN**
MACHINE FOR EXPANDING OR COMPRESSING GASEOUS MEDIA
MACHINE POUR DÉTENDRE OU COMPRIMER DES MILIEUX GAZEUX

(30) Priorität: 05.02.2019 DE 102019102819; 29.03.2019 DE 102019108188
(43) Veröffentlichungstag der Anmeldung: 15.12.2021
(73) Patentinhaber: BITZER Kühlmaschinenbau GmbH, 71065 Sindelfingen (DE)
(72) Erfinder: REPENTIN, Franck, 71083 Herrenberg (DE); BLUMHARDT, Marcus, 71277 Rutesheim (DE)
(74) Vertreter: Hoeger, Stellrecht & Partner Patentanwälte mbB
(86) Internationale Anmeldenummer: PCT/EP2020/052313
(87) Internationale Veröffentlichungsnummer: WO 2020/160999

(56) Entgegenhaltungen:
- WO-A1-2016/099746
- JP-A- 2016 007 113
- JP-A- S57 153 986
- JP-A- S62 195 481
- US-A- 5 246 357
- US-A1- 2002 037 229

## Beschreibung

Die Erfindung betrifft eine Maschine zum Entspannen oder komprimieren von im Wesentlichen gasförmigen Medien, umfassend ein Maschinengehäuse und mindestens einen in dem Maschinengehäuse in einer Schraubenläuferbohrung angeordneten und sich zwischen einer Niederdruckseite und einer Hochdruckseite der Schraubenläuferbohrung erstreckenden sowie mit dem im Wesentlichen gasförmigen Medium zusammenwirkenden Schraubenläufer, welcher durch Rotation um eine Schraubenachse entweder das im Wesentlichen gasförmige Medium von der Niederdruckseite zur Hochdruckseite fördert und dabei komprimiert oder von der Hochdruckseite zur Niederdruckseite fördert und dabei entspannt und welcher im Maschinengehäuse beiderseits mittels jeweils einem Lagersatz gelagert ist, wobei jeder Lagersatz mindestens ein Radiallager und mindestens einer der Lagersätze mindestens ein axial wirkendes Lager aufweist, welches den mindestens einen Schraubenläufer axial gegen eine axiale Verschiebung aus seiner Betriebsposition in Richtung der Niederdruckseite abstützt, sowie eine mit dem Schraubenläufer gekoppelte oder koppelbare Motor-/Generatoreinheit.

Derartige Maschinen sind aus dem Stand der Technik bekannt, s.z.B. Dokumente WO2016/099746 A1, US5246357 A oder US2002/037229 A1.

Bei diesen besteht das Problem, dass die axial wirkenden Lager die Schraubenläufer lediglich axial gegen eine Verschiebung in Richtung der Niederdruckseite abstützen, jedoch nicht in Richtung der Hochdruckseite, so dass bei einem Ein- oder Ausschaltvorgang oder einer Betriebsunterbrechung oder einer falschen Drehrichtung das Problem besteht, dass die Schraubenläufer hochdruckseitig an dem Maschinengehäuse unter Reduzierung des üblicherweise vorhandenen Dichtspalts zur Anlage kommen, sich dadurch erwärmen und folglich Schaden nehmen.

Der Erfindung liegt daher die Aufgabe zugrunde, eine Maschine der eingangs beschriebenen Art derart zu verbessern, dass derartige Probleme nicht mehr auftreten.

Diese Aufgabe wird bei einer Maschine der eingangs beschriebenen Art erfindungsgemäß dadurch gelöst, dass der mindestens eine Schraubenläufer mit mindestens einem axialen Stützlager versehen ist, welches den mindestens einen Schraubenläufer derart axial abstützt, dass eine hochdruckseitige Stirnseite des mindestens einen Schraubenläufers berührungsfrei zu einer dieser Stirnseite zugewandten Stirnwand des den mindestens einen Schraubenläufer aufnehmenden Maschinengehäuses geführt ist.

Dabei ist die hochdruckseitige Stirnseite des Schraubenläufers durch eine Stirnseite oder einen Abschluss einer Schraubenkontur des Schraubenläufers gebildet.

Der Vorteil der erfindungsgemäßen Lösung ist somit darin zu sehen, dass durch das vorgesehene axiale Stützlager die Möglichkeit besteht, einen Mindestdichtspalt zwischen der Stirnseite des Schraubenläufers und der Stirnwand des Maschinengehäuses auch bei ungünstigen Betriebszuständen aufrecht zu erhalten und somit eine Beschädigung der Schraubenläufer und/oder des Gehäuses durch Berührungen zwischen der Stirnseite des Schraubenläufers und der Stirnwand des Maschinengehäuses zu verhindern.

Dabei könnte bei der erfindungsgemäßen Lösung das mindestens eine axiale Stützlager in dem Maschinengehäuse in axialer Richtung stationär angeordnet sein, wobei die Anordnung des axialen Stützlagers dann voraussetzen würde, dass dies sehr präzise in dem Maschinengehäuse positioniert ist, um den geforderten Mindestdichtspalt zwischen der Stirnseite des Schraubenläufers und der Stirnwand des Maschinengehäuses aufrecht zu erhalten.

Eine besonders vorteilhafte Lösung sieht vor, dass das mindestens eine axiale Stützlager in dem Maschinengehäuse in axialer Richtung bewegbar und in Richtung der Niederdruckseite kraftbeaufschlagt angeordnet ist.

Diese Lösung hat den Vorteil, dass durch die Kraftbeaufschlagung des bewegbar angeordneten Stützlagers das Stützlager in der Lage ist, derart auf den mindestens einen Schraubenläufer einzuwirken, dass dieser durch das axial wirkende Lager in Richtung der Niederdruckseite so geführt ist, dass im Wesentlichen keinerlei axiales Spiel vorhanden ist, so dass der mindestens eine Schraubenläufer in allen Betriebszuständen in seiner vorgesehenen Betriebsstellung mit dem vorgesehenen hochdruckseitigen Mindestdichtspalt in dem Maschinengehäuse geführt ist.

Hinsichtlich der Kraftbeaufschlagung des mindestens einen Stützlagers wären die unterschiedlichsten Möglichkeiten denkbar.

Beispielsweise könnte ein Verschiebeantrieb, beispielsweise betätigt durch Öldruck, auf das Stützlager wirken.

Eine besonders einfache und zweckmäßige Lösung sieht vor, dass das mindestens eine Stützlager mit einer in der axialen Richtung wirkenden elastischen Federkraft beaufschlagt ist, so dass die Federkraft insbesondere permanent auf den mindestens einen Schraubenläufer in Richtung der Niederdruckseite wirkt.

Insbesondere besteht damit die Möglichkeit, dass das mindestens eine Stützlager in axialer Richtung derart auf den Schraubenläufer einwirkt, dass das axial wirkende Lager durch das Stützlager in Richtung der Niederdruckseite ständig vorgespannt ist und somit insgesamt eine präzise axiale Führung des mindestens einen Schraubenläufers gegeben ist.

Eine besonders einfache Lösung sieht vor, dass das Stützlager durch ein Tellerfederpaket beaufschlagt ist.

Hinsichtlich des Orts der Einwirkung des Stützlagers auf den mindestens einen Schraubenläufer wurden bislang keine näheren Angaben gemacht.

So sieht eine vorteilhafte Lösung vor, dass das mindestens eine Stützlager auf einen den mindestens einen Schraubenläufer lagernden Lagerzapfen wirkt. Dabei könnte das Stützlager auf verschiedenen Seiten des Schraubenläufers wirksam sein.

Eine besonders vorteilhafte Lösung sieht vor, dass das mindestens eine Stützlager auf den auf der der Motor-/Generatoreinheit abgewandten Seite des mindestens einen Schraubenläufers angeordneten Lagerzapfen wirkt. Beispielsweise hat dies zur Folge, dass bei einem niederdruckseitigen Antrieb des Schraubenläufers das Stützlager auf den hochdruckseitig angeordneten Lagerzapfen wirkt.

Weiter sieht eine konstruktiv besonders vorteilhafte Lösung vor, dass das mindestens eine Stützlager in einem der Motor-/Generatoreinheit abgewandt angeordneten Lagergehäuse des Maschinengehäuses angeordnet ist.

Ferner sieht eine günstige Lösung vor, dass das mindestens eine Stützlager auf einen über die Hochdruckseite des Schraubenläufers überstehenden Lagerzapfen einwirkt.

Grundsätzlich bestünde die Möglichkeit, das mindestens eine Stützlager an dem Zapfenabschnitt des Schraubenläufers anzuordnen, an dem auch der Lagersatz angeordnet ist.

Erfindungsgemäß sieht eine raumsparende Lösung jedoch vor, dass das mindestens eine Stützlager an einem Aufnahmezapfen angeordnet ist.

Ein derartiger Aufnahmezapfen lässt sich in einfacher Weise relativ zu dem den Lagersatz tragenden Lagerzapfen flexibel gestalten, so dass insbesondere die Möglichkeit besteht, den Aufnahmezapfen mit dem auf diesem angeordneten Stützlager raumsparend anzuordnen.

Eine zweckmäßige Lösung sieht dabei vor, dass der Aufnahmezapfen an einem Ende eines Lagerzapfens angeordnet ist.

Besonders günstig ist es dabei, wenn der Aufnahmezapfen eine radiale Ausdehnung zur jeweiligen Schraubenachse aufweist, die geringer als die des Lagerzapfens ist.

Ferner ist es zur Abstützung des mindestens einen Stützlagers günstig, wenn der Aufnahmezapfen eine Flanschfläche aufweist, auf welche das Stützlager einwirken kann, um den mindestens einen Schraubenläufer in der entsprechenden Richtung zu beaufschlagen.

Prinzipiell könnte der Aufnahmezapfen einstückig an den Lagerzapfen angeformt sein.

Erfindungsgemäß ist der Aufnahmezapfen in das Ende des Lagerzapfens eingesetzt.

Daher lässt sich insbesondere die erfindungsgemäße Lösung bei vorhandenen Maschinen oder vorhandenen Konstruktionen in einfacher Weise nachrüsten.

Dabei könnte der Aufnahmezapfen durch jede Art von Fügen in das Ende des Lagerzapfens eingesetzt und mit diesem verbunden werden.

Eine besonders einfache und vorteilhafte Lösung sieht jedoch vor, dass der Aufnahmezapfen in das Ende des Lagerzapfens eingeschraubt ist.

Um ferner sicherzustellen, dass der Aufnahmezapfen möglichst optimal relativ zum Lagerzapfen zentriert ist, ist vorzugsweise vorgesehen, dass der Aufnahmezapfen relativ zu dem Lagerzapfen durch einen Zentrierkonus fixiert ist.

Ein derartiger Zentrierkonus ist beispielsweise sowohl am Aufnahmezapfen und/oder als konische Zentrierfläche am Lagerzapfen vorgesehen, so dass die beiden konischen Flächen eine optimale Zentrierung des Aufnahmezapfens erlauben.

Eine konstruktiv besonders günstige Lösung sieht vor, dass der Aufnahmezapfen einen geringeren Durchmesser aufweist als ein den Lagersatz, insbesondere das Radiallager und/oder das axial wirkende Lager tragender Zapfenabschnitt des Lagerzapfens.

Hinsichtlich der Dimension des Stützlagers wurden im Zusammenhang mit der bisherigen Erläuterung der einzelnen Ausführungsbeispiele keine näheren Angaben gemacht.

So sieht eine vorteilhafte Lösung vor, dass das mindestens eine Stützlager so dimensioniert ist, dass die von diesem aufzunehmenden Stützkräfte im Bereich von 10 % bis 80 % der Stützkräfte des axial wirkenden Lagers liegen.

Hierdurch lässt sich insbesondere ein raumsparender kostengünstiger und aufgrund geringer Verlustleistung reibungsarmer Einbau realisieren.

Eine noch vorteilhaftere Dimensionierung sieht vor, dass das mindestens eine Stützlager bezogen auf die jeweilige Schraubenachse eine radiale Ausdehnung aufweist, die im Bereich von 20 % bis 70 % der radialen Ausdehnung des axial wirkenden Lagers liegt.

Im Rahmen der erfindungsgemäßen Lösung ist es auch möglich pro Schraubenläufer zwei Stützlager entweder beide hochdruckseitig oder beide niederdruckseitig oder eines hochdruckseitig und eines niederdruckseitig vorzusehen.

Noch besser ist es, wenn das Stützlager bezogen auf die jeweilige Schraubenachse eine radiale Ausdehnung aufweist, die im Bereich von 30 % bis 60 % der radialen Ausdehnung des axial wirkenden Lagers liegt.

Eine weitere vorteilhafte Dimensionierung sieht vor, dass das Stützlager einen Lagerinnendurchmesser aufweist, der kleiner ist als ein Innendurchmesser des axial wirkenden Lagers, insbesondere in der Größenordnung von 20 % bis 80 % des Innendurchmessers des axial wirkenden Lagers liegt.

Eine vorteilhafte Ausführungsform der erfindungsgemäßen Expansions-/Kompressionsmaschine sieht vor, dass diese zwei in Schraubenläuferbohrungen angeordnete Schraubenläufer aufweist, die mit ihren Schraubenkonturen ineinandergreifen, wobei mindestens einem der Schraubenläufer ein Stützlager zugeordnet ist.

Besonders günstig ist es jedoch, wenn jedem Schraubenläufer mindestens ein Stützlager zugeordnet ist.

Ferner sieht eine vorteilhafte Dimensionierung vor, dass das mindestens eine Stützlager einen Lagerinnendurchmesser aufweist, der kleiner ist als ein Innendurchmesser des Radiallagers, insbesondere im Bereich von 20 % bis 80 % des Innendurchmessers des Radiallagers der Lagersätze liegt.

Ergänzend zu den bislang beschriebenen Lösungen wird bei einer Maschine der eingangs beschriebenen Art das Problem, die Drehzahl der Motorgeneratoreinheit möglichst präzise zu erfassen, erfindungsgemäß dadurch gelöst, dass die Maschine mit einem Drehzahlsensor versehen ist, welcher mit einer sich proportional zu einem der Schraubenläufer drehenden Welle gekoppelt ist und welcher als elektrischer Sensorgenerator ausgebildet ist, der ein elektrisches Sensorsignal erzeugt.

Der Vorteil der erfindungsgemäßen Lösung ist darin zu sehen, dass ein Sensorgenerator ein einfaches Bauteil ist, das sich mit jeder proportional zum Rotor der Motor-/Generatoreinheit drehenden Welle der erfindungsgemäßen Maschine koppeln lässt, um als Sensorsignal eine elektrische Spannung zu erzeugen, die einen Rückschluss auf die Drehzahl des Rotors der Motor-/Generatoreinheit zulässt.

Als elektrisches Signal kann prinzipiell sowohl ein Strom als auch eine Spannung ausgewertet werden.

Die Auswertung eines Stroms ist jedoch aufwendiger, da dieser über einen Verbraucher fliesen muss und damit nicht mehr proportional zu der Drehzahl des Generators ist.

Aus diesem Grund ist es besonders vorteilhaft, wenn als elektrisches Sensorsignal ein Spannungssignal erzeugt wird, das durch eine unmittelbare Spannungsmessung erfasst werden kann und im Wesentlichen proportional zu der Drehzahl der Motor-/Generatoreinheit ist.

Eine derartige Spannung kann dabei insbesondere ohne einen signifikant fließenden Strom und somit ohne zusätzlichen schaltungstechnischen Aufwand erfasst werden.

Besonders vorteilhaft lässt sich die erfindungsgemäße Lösung dann realisieren, wenn der Sensorgenerator in einem Maschinengehäuse der Maschine angeordnet und insbesondere in diesem dem Arbeitsmedium und/oder Schmiermittel ausgesetzt ist.

Diese Lösung hat den großen Vorteil, dass sich der Sensorgenerator in einfacher Weise in die erfindungsgemäße Maschine integrieren lässt und außerdem den Vorteil, dass bei der Integration des Sensorgenerators keinerlei Maßnahmen getroffen werden müssen, um diesen vor Schmiermittel und/oder dem gasförmigen Medium zu schützen.

Eine weitere vorteilhafte Lösung sieht vor, dass der Sensorgenerator einen Sensorrotor mit permanenter Magnetisierung aufweist, der mit einem Statorwicklungen aufweisenden Stator zusammenwirkt, wobei bei sich drehendem Sensorrotor an den Statorwicklungen des Stators eine von der Drehzahl des Sensorrotors abhängige Spannung auftritt, welche das Sensorsignal darstellt.

Diese Lösung ist insbesondere insoweit vorteilhaft, als durch die permanente Magnetisierung des Sensorrotors die in den Statorwicklungen auftretende Spannung im Wesentlichen proportional, insbesondere proportional, zu der Drehzahl des Sensorrotors ist, so dass das Sensorsignal in einfacher Weise einen Rückschluss auf die Drehzahl des Sensorrotors und somit auch auf die Drehzahl des Rotors der Motor-/Generatoreinheit zulässt.

Ferner ist es vorteilhaft, wenn der Sensorrotor zur Realisierung der permanenten Magnetisierung ein Seltene Erden umfassendes Magnetmaterial aufweist, da ein derartiges Magnetmaterial die Möglichkeit eröffnet, eine permanente Magnetisierung des Sensorrotors zu gewährleisten.

Besonders günstig ist es, wenn der Sensorgenerator so ausgelegt ist, dass er bei einer Drehzahl der Motor-/Generatoreinheit, welche zu einer Frequenz der Wechselspannung führt, die im Bereich einer Netzfrequenz eines mit der Motor-/Generatoreinheit gekoppelten Versorgungsnetzes liegt, eine Spannung im Bereich zwischen 30 V und 48 V, vorzugsweise zwischen 40 V und 48 V erzeugt.

Diese Lösung hat den großen Vorteil, dass das Erzeugen einer möglichst hohen Spannung durch den Sensorgenerator in dem für die Auswertung der Drehzahl der Motor-/Generatoreinheit relevanten Drehzahlbereich die Genauigkeit bei der Erfassung verbessert, ohne dass elektrische Bauteile verwendet werden müssen, welche für Spannungen über 48 V geeignet sein müssen, so dass der Sensorgenerator und die Auswerteelektronik mit kostengünstigen Bauteilen realisiert werden können.

Hinsichtlich des Einbaus des Sensorrotors des Sensorgenerators sind die unterschiedlichsten Möglichkeiten denkbar.

Beispielsweise wäre es denkbar, den Sensorrotor über Getriebemittel mit einer Welle der erfindungsgemäßen Maschine, insbesondere der Motor-/Generatoreinheit, zu koppeln.

Eine besonders einfache Lösung sieht vor, dass der Sensorrotor des Sensorgenerators direkt mit einem Wellenende drehfest gekoppelt und von diesem getragen ist.

Dies vereinfacht den Einbau des Sensorgenerators erheblich, da keinerlei Lagerung für den Sensorrotor erforderlich ist, sondern die Lagerung des Sensorrotors des Sensorgenerators über das Wellenende, das seinerseits gelagert ist, erfolgt.

Eine besonders zweckmäßige Lösung sieht vor, dass der Sensorrotor des Sensorgenerators auf einem mit einem Lagerzapfen des Schraubenläufers verbundenen Rotorträger angeordnet ist.

Um den Rotorträger in einfacher Weise montieren zu können, hat es sich als besonders zweckmäßig erwiesen, wenn der Rotorträger mittels einer Zentrierschraube mit dem Wellenende oder mit dem Lagerzapfen verbunden ist, um eine möglichst präzise Zentrierung des Rotorträgers zu erreichen, wodurch wiederum ein möglichst kleiner Spalt zwischen dem Sensorrotor und dem Stator realisierbar ist.

Ferner ist vorzugsweise vorgesehen, dass der Rotorträger mittels eines Zentrierkonus relativ zu dem Wellenende oder dem Lagerzapfen zentriert ist.

Insbesondere ist vorzugsweise vorgesehen, dass das mit dem Sensorrotor gekoppelte und diesen tragende Wellenende oder der diesen tragende Lagerzapfen, von einem Lager, insbesondere von einem der Lagersätze, zentriert geführt ist, so dass das Wellenende oder der Lagerzapfen selbst sich ebenfalls nicht mit nennenswerten Zentrierfehlern bewegt und diese auf den Sensorrotor überträgt.

Insbesondere ist vorgesehen, dass das Wellenende oder der Lagerzapfen von dem dieses zentriert führenden Lager, insbesondere dem Lager eines der Lagersätze, maximal über eine Distanz von dem Lager weg erstreckt, welche einen Durchmesser des Wellenendes oder des Lagerzapfens entspricht.

Eine möglichst präzise Zentrierung des Sensorrotors relativ zu der Achse, um welche sich dieser dreht, ist deshalb von Vorteil, weil damit - wie bereits vorstehend erwähnt - ein geringer Spalt zwischen dem Sensorrotor und dem Stator realisiert werden kann, der wiederum für die Erzeugung eines möglichst genauen und möglichst großen Sensorsignals förderlich ist.

Im Zusammenhang mit der bisherigen Beschreibung der Möglichkeiten des Einbaus des Sensorgenerators in die erfindungsgemäße Maschine wurde lediglich definiert, dass dieser mit einer sich proportional zum Rotor der Motor-/Generatoreinheit laufenden Drehzahl der Maschine drehen soll.

Eine vorteilhafte Lösung sieht vor, dass der Sensorgenerator in einem Maschinengehäuse der erfindungsgemäßen Maschine angeordnet ist.

Diese Lösung hat den Vorteil, dass dadurch der Sensorgenerator in einfacher Weise geschützt und dann darüber hinaus auch in unmittelbarer Kopplung zu der diesen antreibenden Welle angeordnet werden kann, so dass keine Wellendurchführung durch das Maschinengehäuse erforderlich ist.

Innerhalb des Maschinengehäuses kann der Sensorgenerator dann noch in unterschiedlichen Gehäuseteilen oder Gehäusebereichen desselben angeordnet sein.

Beispielsweise ist es denkbar, den Sensorgenerator in dem Schraubenläufergehäuse anzuordnen, wobei dann vorzugsweise vorgesehen ist, dass der Sensorgenerator mit einer Welle eines der Schraubenläufer oder einem Lagerzapfenabschnitt eines der Schraubenläufer gekoppelt ist.

Eine alternative Möglichkeit sieht vor, dass der Sensorgenerator in einem Motor-/Generatorgehäuse genordnet ist.

Insbesondere ist es in diesem Fall von Vorteil, wenn der Sensorgenerator mit der Generatorwelle der Motor-/Generatoreinheit gekoppelt ist, so dass dieser unmittelbar die Drehzahl des Rotors derselben erfasst.

Ferner ist vorzugsweise vorgesehen, dass der Sensorrotor des Sensorgenerators mit einem Wellenende der Generatorwelle gekoppelt und von diesem Getragen ist.

Hinsichtlich des Einbaus des Stators des Sensorgenerators wurden ebenfalls bislang keine näheren Angaben gemacht.

So sieht eine vorteilhafte Lösung vor, dass der Stator des Sensorgenerators an dem Maschinengehäuse, insbesondere an einer Komponente desselben, stationär gehalten ist.

Insbesondere ist vorgesehen, dass der Stator des Sensorgenerators stationär an einem Gehäuseelement, insbesondere einem vom Maschinengehäuse demontierbaren Gehäuseelement, gehalten ist.

Eine besonders günstige Lösung sieht vor, dass der Sensorgenerator in einem hochdruckseitigen Lagergehäuse angeordnet ist, in dem sich dann in einfacher Weise die Kombination mit der Anordnung des Stützlagers vorteilhaft realisieren lässt.

Um den Stator des Sensorgenerators möglichst wartungsfreundlich und gegebenenfalls auch nachrüstfreundlich anzuordnen ist vorzugsweise vorgesehen, dass der Stator des Sensorgenerators an einem demontierbaren Gehäuseelement, beispielsweise in einem Lagergehäusedeckel, stationär gehalten ist.

Damit lässt sich insbesondere einfach eine Wartung vornehmen und gegebenenfalls auch der Sensorgenerator einfach nachrüsten.

Vorzugsweise ist dabei das Gehäuseelement mit einer elektrischen Anschlussdurchführung versehen, um in einfacher Weise den Sensorgenerator mit einer geeigneten Auswerteelektronik zur Bestimmung der Drehzahl verbinden zu können.

Eine besonders günstige Lösung sieht vor, dass der Sensorrotor des Sensorgenerators mit einem mit dem mindestens einen Schraubenläufer gekoppelten Lagerring des entsprechenden Stützlagers drehfest gekoppelt ist, so dass sich dadurch der erfindungsgemäße Drehzahlsensor in einfacher Weise nahe des Stützlagers oder in Kombination mit der Anordnung des Stützlagers anordnen lässt.

Insbesondere ist bei einer vorteilhaften Lösung vorgesehen, dass der Sensorrotor des Sensorgenerators mit einem Lagerzapfen drehfest gekoppelt ist, auf welchen das mindestens eine Stützlager einwirkt.

Weitere Merkmale und Vorteile der Erfindung sind Gegenstand der nachfolgenden Beschreibung sowie der zeichnerischen Darstellung einiger Ausführungsbeispiele.

In der Zeichnung zeigen:
- Fig. 1: einen Längsschnitt durch ein erstes Ausführungsbeispiel einer erfindungsgemäßen Maschine zum entspannen und/oder komprimieren von gasförmigen Medien;
- Fig. 2: einen Schnitt längs Linie 2-2 in Fig. 1;
- Fig. 3: eine schematische Darstellung eines Kreisprozesses mit Einsatz einer erfindungsgemäßen Maschine zum Entspannen von gas-förmigen Medien;
- Fig. 4: eine schematische Darstellung eines Kältemittelkreislaufs mit einer erfindungsgemäßen Maschine zum Komprimieren von gasförmigen Medien;
- Fig. 5: eine vergrößerte Darstellung eines Bereichs A in Fig. 1 und

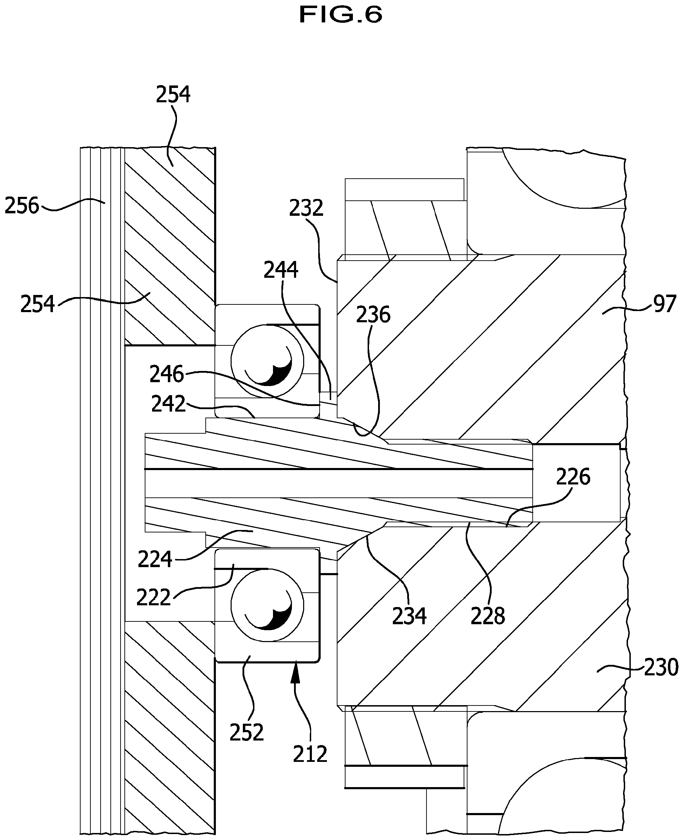

- Fig. 6: eine nochmals vergrößerte Darstellung des in Fig. 5 dargestellten Bereichs mit Darstellung eines erfindungsgemäßen Stützlagers;
- Fig. 7: einen Längsschnitt durch ein zweites Ausführungsbeispiel einer erfindungsgemäßen Maschine ähnlich Fig. 1 zum Entspannen und/oder komprimieren von gasförmigen Medien und
- Fig. 8: eine vergrößerte Darstellung des Bereichs B in Fig. 7.

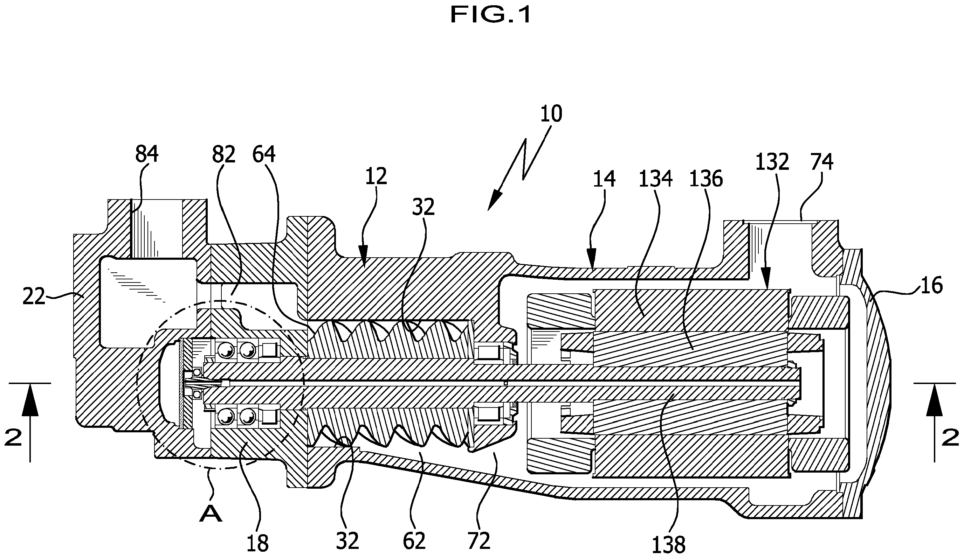

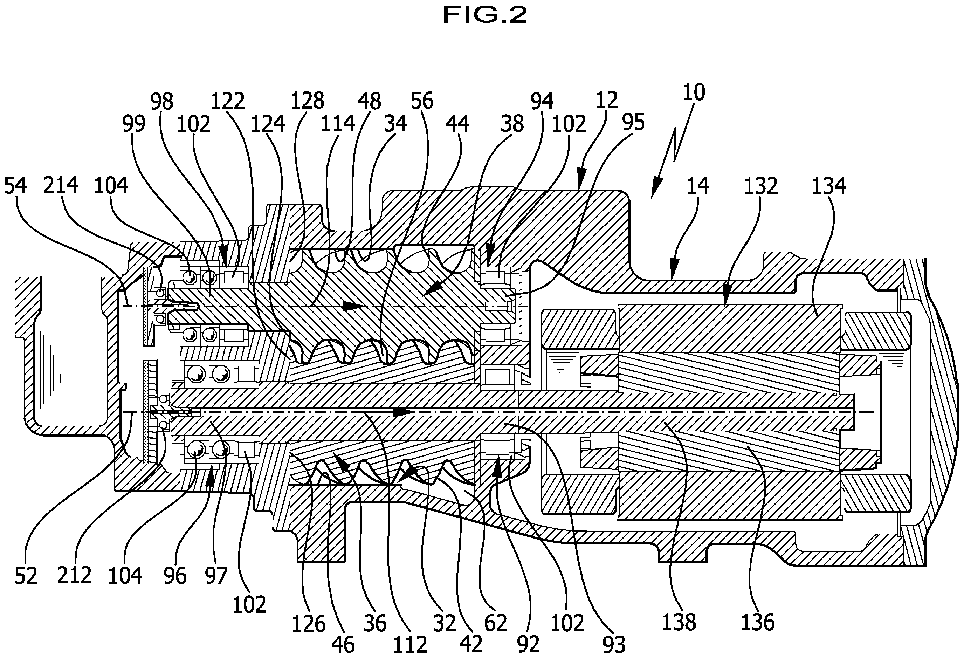

Ein erstes Ausführungsbeispiel einer erfindungsgemäßen Maschine, insbesondere einer Expansions-/Kompressionsmaschine, dargestellt in den Fig. 1 und 2 umfasst ein als Ganzes mit 10 bezeichnetes Maschinengehäuse, gebildet aus einem Schraubenläufergehäuse 12, an welches sich auf einer Seite ein Motor-/Generatorgehäuse 14 anschließt, das durch einen Gehäusedeckel 16 auf einer dem Schraubenläufergehäuse 12 gegenüberliegenden Seite verschlossen ist.

Auf einer dem Motor-/Generatorgehäuse 14 gegenüberliegenden Seite schließt sich an das Schraubenläufergehäuse 12 ein Lagergehäuse 18 an, das auf seiner dem Schraubenläufergehäuse 12 gegenüberliegenden Seite durch einen Lagergehäusedeckel 22 verschlossen ist.

In dem Schraubenläufergehäuse 12 sind Schraubenläuferbohrungen 32, 34 vorgesehen, in denen Schraubenläufer 36, 38 angeordnet sind, die mit ihren Schraubenkonturen 42, 44 ineinander greifen und mit Wandflächen 46, 48 der Schraubenläuferbohrungen zusammenwirken, um bei einer Rotation um die jeweiligen Schraubenachsen 52, 54 zwischen den Schraubenkonturen 42, 44 und den Wandflächen 46, 48 eingeschlossene Kammern 56 zu bilden, wobei diese Kammern 56 im Anschluss an eine sich an die Schraubenläuferbohrungen anschließenden Niederdruckseite 62 das größtmögliche Volumen aufweisen und im Anschluss an eine Hochdruckseite 64 das geringste Volumen aufweisen.

Bei dem dargestellten Ausführungsbeispiel liegt dabei die Niederdruckseite 62 auf einer dem Motor-/Generatorgehäuse 14 zugewandten Seite des Schraubenläufergehäuses 12, wobei die Niederdruckseite 62 durch eine das Motor-/Generatorgehäuse 14 durchsetzende Gasführung 72 mit einem Niederdruckanschluss 74 des Maschinengehäuses 10 verbunden ist, und wobei der Niederdruckanschluss 74 vorzugsweise nahe dem Gehäusedeckel 16 angeordnet ist, so dass die zwischen dem Niederdruckanschluss 74 und der Niederdruckseite 62 verlaufende Gasführung 72 möglichst das Motor-/Generatorgehäuse 14 über seine ganze Länge durchsetzt.

Die Hochdruckseite 64 liegt bei dem dargestellten Ausführungsbeispiel auf einer dem Lagergehäuse 18 zugewandten Seite des Schraubenläufergehäuses 12 wobei sich an die Hochdruckseite 64 ein Hochdruckkanal 82 anschließt, der das Lagergehäuse 18 und den Lagergehäusedeckel 22 durchsetzt und bis zu einem Hochdruckanschluss 84 des Maschinengehäuses 10 führt, der beispielsweise in dem Lagergehäusedeckel 22 angeordnet ist.

Wie in Fig. 1 und 2 dargestellt, sind die Schraubenläufer 36 und 38 um die jeweiligen Schraubenachsen 52 und 54 in dem Gesamtgehäuse 10 drehbar gelagert, wobei für jeden der Schraubenläufer 36, 38 ein niederdruckseitiger Lagersatz 92 beziehungsweise 94 vorgesehen ist und für jeden der Schraubenläufer 36, 38 ein hochdruckseitiger Lagersatz 96, 98 vorgesehen ist.

Jeder der Lagersätze 92, 94, 96, 98 umfasst jeweils mindestens ein Radiallager 102 und zusätzlich umfasst einer der Lagersätze 92, 94, 96, 98 für jeden der Schraubenläufer 36, 38, beispielsweise der jeweilige hochdruckseitige Lagersatz 96, 98, noch mindestens ein axial wirksames Lager 104.

Die Lagersätze 92, 94, 96, 98 sind insbesondere jeweils auf einen Lagerzapfenabschnitt 93, 95, 97, 99 des jeweiligen Schraubenläufers 36, 38 angeordnet.

Die axial wirksamen Lager 104 stützen dabei die Schraubenläufer 36, 38 gegen eine Bewegung aus ihrer Betriebsstellung heraus in Richtung der Niederdruckseite 62 ab, da die Druckdifferenz zwischen der Hochdruckseite 64 und der Niederdruckseite 62 derart auf die Schraubenläufer 36, 38 wirkt, dass diese die Tendenz haben, sich in einer parallel zu den Schraubenachsen 52, 54 verlaufenden Richtung 112, 114 von der Hochdruckseite 64 weg in Richtung der Niederdruckseite 62 zu bewegen, und somit einen in der Betriebsstellung vorgesehenen Dichtspalt zwischen einer jeweiligen Stirnseite 122, 124 des jeweiligen Schraubenläufers 36 beziehungsweise 38, das heißt insbesondere einem hochdruckseitigen Abschluss oder einer hochdruckseitigen Stirnseite 122, 124 der Schraubenkontur 42, 44, und einer hochdruckseitig die Schraubenläuferbohrungen 32, 34 abschließenden Stirnwand 126, 128 zu vergrößern.

Die Aufrechterhaltung der Betriebsstellung und somit dieses Dichtspalts zwischen der jeweiligen Stirnseite 122, 124 des jeweiligen Schraubenläufers 36 beziehungsweise 38 mit einer vorgegebenen Breite der durch einen Ölfilm verschlossen ist, ist erforderlich um eine optimale Funktion der Maschine zu gewährleisten, und wird daher durch die Wirkung der axial wirksamen Lager 104 auf die Schraubenläufer 36, 38 vorgegeben.

Die Schraubenläufer 36, 38, die um ihre Schraubenachsen 52, 54 rotieren, sind mit einer als Ganzes mit 132 bezeichneten elektrischen Motor-/Generatoreinheit gekoppelt, die in dem Motor-/Generatorgehäuse 14 vorgesehen ist und einen Stator 134 aufweist, der fest in dem Motor-/Generatorgehäuse 14 angeordnet ist und einen vom Stator 134 umschlossenen Rotor 136 aufweist, der auf einer sowohl den Rotor 136 als auch den Schraubenläufer 36 durchsetzenden gemeinsamen Antriebswelle 138 sitzt, die durch die Lagersätze 92 und 102 gelagert ist.

Wie in Fig. 1 und 2 dargestellt, ist die elektrische Motor-/Generatoreinheit 132 so angeordnet, dass der Niederdruckkanal 72 zumindest abschnittsweise längs des Stators 134 verläuft, gegebenenfalls aber auch noch zwischen dem Rotor 136 und dem Stator 134 hindurchverläuft, um die elektrische Motor-/Generatoreinheit 132 mit dem niederdruckseitig geführten Gas zu kühlen.

Der mit der elektrischen Motor-/Generatoreinheit 132 gekoppelte Schraubenläufer 36 ist seinerseits über die ineinander greifenden Schraubenkonturen 42, 44 auch mit dem Schraubenläufer 38 gekoppelt, so dass die sich ausbildenden Kammern 56 je nach Drehrichtung der Schraubenläufer 36, 38 entweder von der Hochdruckseite 64 zur Niederdruckseite 62 wandern und somit hochdruckseitig aufgenommenes Gas entspannen, das auf der Niederdruckseite dann als expandiertes Gas 62 vorliegt, oder von der Niederdruckseite 62 zur Hochdruckseite 64 wandern und dabei niederdruckseitig aufgenommenes Gas komprimieren, das an der Hochdruckseite 64 abgegeben wird.

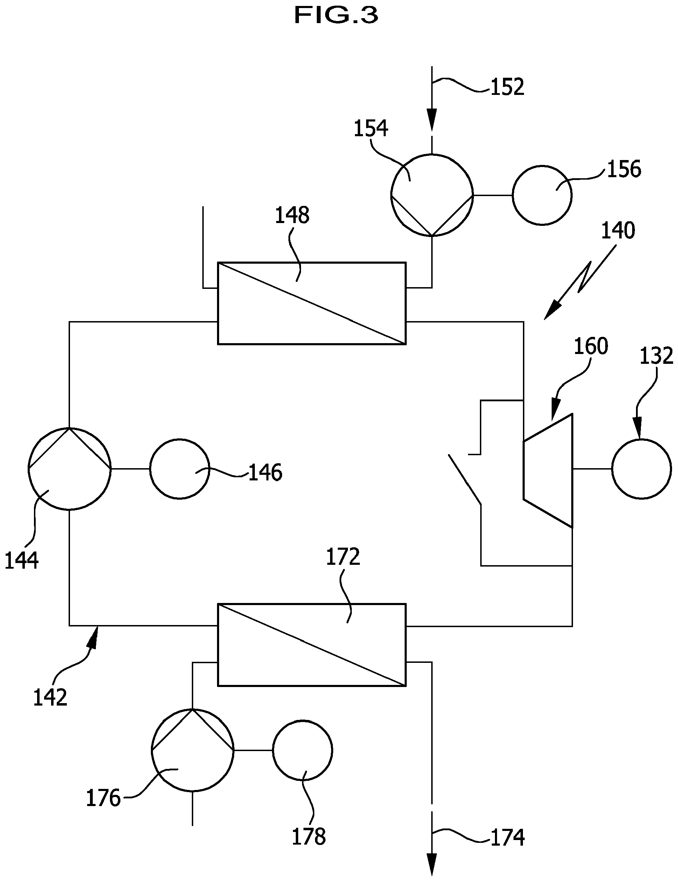

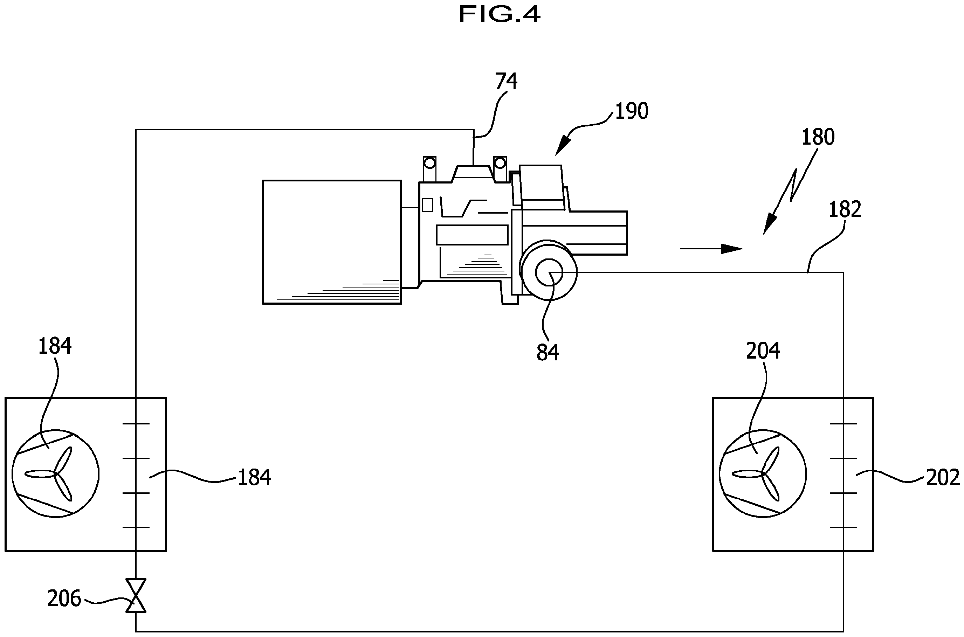

Diese beiden verschiedenen Betriebsweisen sind in den Fig. 3 und 4 schematisch dargestellt.

In Fig. 3 ist ein als Ganzes mit 140 bezeichneter Kreisprozess, insbesondere ein mit einem Rankine-Zyklus arbeitender Kreisprozess, dargestellt, bei welchem ein in einem Kreislauf 142 geführtes Arbeitsmedium durch einen Verdichter 144 der durch einen Motor 146 angetrieben ist, verdichtet wird, nachfolgend einen Wärmeübertrager 148 durchströmt und durch Zufuhr von Wärme aus einem Wärmestrom 152 verdampft, wobei der Wärmestrom 152 beispielsweise mittels eines Heißwasserkreislaufs und einer Heißwasserpumpe 154 mit einem Antriebsmotor 156 dem Wärmeübertrager 148 zugeführt wird.

Das durch Zufuhr des Wärmestroms 152 in dem Wärmeübertrager 148 verdampfte Arbeitsmedium wird daraufhin auf den Wärmeübertrager 148 folgend in dem Kreislauf 142 einer Expansionsmaschine 160 zugeführt, die gemäß der Expansions-/Kompressionsmaschine, dargestellt in Fig. 1 und 2, ausgebildet ist, wobei die Motor-/Generatoreinheit 132 als Generator arbeitet.

Hierbei wird das verdampfte Arbeitsmedium über den Hochdruckanschluss 84 der Expansionsmaschine 160 zugeführt und tritt auf der Hochdruckseite 64 zwischen die Schraubenläufer 36, 38 ein, wird von den Kammern 56 aufgenommen und entspannt auf dem Weg der Kammern 56 zur Niederdruckseite 62, wobei sich - je nach Druck und Temperatur - auch Flüssigkeitstropfen bilden können.

Das entspannte Arbeitsmedium wird dann einem weiteren Wärmeübertrager 172 zugeführt, in welchem das Arbeitsmedium kondensiert wird und eine Abfuhr eines Wärmestroms 174, beispielsweise durch einen Kaltwasserkreislauf erfolgt, in dem ebenfalls eine Pumpe 176 angeordnet ist, die durch einen Motor 178 angetrieben ist.

Die Abfuhr des Wärmestroms 174 kann aber auch durch einen kühlenden Luftstrom erfolgen.

Insbesondere erfolgt durch die Pumpe oder den Verdichter 144 eine isentrope, vorzugsweise ideale isentrope, Verdichtung eines von dem Wärmeübertrager 172 erzeugten flüssig gesättigten Kondensats des Arbeitsmediums und in dem Wärmeübertrager 148 erfolgt eine im Wesentlichen isobare Verdampfung des unterkühlten Systems bis zum Erreichen des dampfförmig gesättigten Zustandes, in dem dann das Arbeitsmedium der Expansionsmaschine 160 zugeführt wird, wobei hierdurch in der Expansionsmaschine 160 mechanische Arbeit entsteht, durch welche die Motorgeneratoreinheit 132 angetrieben wird und somit elektrische Energie erzeugt.

Nachfolgend erfolgt im Wärmeübertrager 172 eine isobare, insbesondere eine vollständige isobare, Kondensation des Arbeitsmediums durch Abfuhr des Wärmestroms 174, so dass dann wiederum ein flüssig gesättigtes Kondensat dem Verdichter 144 zugeführt werden kann.

Die in Fig. 1 und 2 dargestellte vorstehend beschriebene Expansions-/Kompressionsmaschine kann aber auch gemäß Fig. 4 in einem Kreisprozess 180 mit einem Kältemittelkreislauf 182 eingesetzt werden, in welchem ein in einem Wärmeübertrager 184 durch Wärmeabfuhr, beispielsweise mittels eines Gebläses 184, erwärmtes Kältemittel dem Niederdruckanschluss 74 zugeführt wird, von der durch die Motor-/Generatoreinheit 132 angetriebenen Kompressormaschine dann auf dem Weg von der Niederdruckseite 62 zur Hochdruckseite 64 verdichtet wird und über den Hochdruckanschluss 84 einem Wärmeübertrager 202 zugeführt wird, der das verdichtete Kältemittel, beispielsweise mittels eines Gebläses 204 kühlt und dann einem Expansionsorgan 206 zur Expansion zuführt, von welchem das expandierte Kältemittel wieder dem Übertrager 184 zugeführt wird.

Bei einem regulären Betrieb sowohl in dem Kreislauf 142 als auch in dem Kältemittelkreislauf 182 ist in der Expansions-/Kompressionsmaschine der Druck auf der Niederdruckseite 62 stets niedriger als der Druck auf der Hochdruckseite 64, so dass in diesen Fällen stets die Schraubenläufer 36, 38 das Bestreben haben, sich mit ihren Stirnseiten 122, 124 von den Stirnwänden 126, 128 in den Richtungen 112, 114 weg zu bewegen und den durch die axial wirksamen Lager 104 vorgegebenen Dichtspalt aufrecht zu erhalten.

Allerdings können bei Start- oder Stoppvorgängen oder bei abgebrochenen Startvorgängen oder fehlerhafter Drehrichtung der Motor-/Generatoreinheit 132 Zustände auftreten, bei denen die in den Richtungen 112 und 114 auf die Schraubenläufer 36, 38 wirkenden Kräfte nahe Null oder gegebenenfalls sogar negativ sind.

In diesen Fällen besteht die Möglichkeit, dass sich der Dichtspalt verkleinert und dadurch die Stirnseiten 122, 124 der Schraubenläufer 36, 38 die Stirnwände 126, 128 berühren, so dass dadurch Erwärmungen, teilweise Überhitzungen, und in Folge davon Beschädigungen an den Stirnseiten 122, 124 und/oder den Stirnwänden 126, 128 oder den Schraubenkonturen 42, 44 der Schraubenläufer 36, 38 auftreten, da die axial wirksamen Lager 104 lediglich in den Richtungen 112 und 114 wirksam sind, nicht jedoch in den den Richtungen 112 und 114 entgegengesetzten Richtungen.

Um derartige Zustände zu vermeiden, sind den Schraubenläufern 36, 38 axiale Stützlager 212, 214 zugeordnet, welche die Schraubenläufer 36, 38 gegen eine Bewegung von der Niederdruckseite 62 zur Hochdruckseite 64 abstützen und eine Mindestgröße des Dichtspalts aufrecht erhalten.

Wie exemplarisch am Beispiel des Stützlagers 212 dargestellt, weist dieses einen Lagerinnenring 222 auf, welcher auf einem Aufnahmezapfen 224 angeordnet ist, wobei der Aufnahmezapfen 224 an einem Lagerzapfen 230, insbesondere den den jeweiligen Lagersatz 92, 94, 96, 98 tragenden Lagerzapfenabschnitt 93, 95, 97, 99 aufweisenden Lagerzapfen 230 angeordnet ist.

Insbesondere ist der Aufnahmezapfen 224 mit einem Gewindeabschnitt 228 seinerseits in eine Gewindebohrung 226 eines Lagerzapfens 230, in diesem Fall des hochdruckseitigen Lagerzapfens 230 des Schraubenläufers 36, eingeschraubt, wobei sich diese Gewindebohrung 226 vorzugsweise von einer Stirnseite 232 des Lagerzapfens 230 koaxial zur jeweiligen Schraubenachse 52 in diesen hinein erstreckt.

Um eine optimale Zentrierung des Aufnahmezapfens 224 zu erreichen, ist der Aufnahmezapfen 224 noch mit einem Zentrierkonus 234 versehen, welcher mit einer am Übergang von der Stirnseite 232 zur Gewindebohrung 226 vorgesehenen Konusfläche 236 zentrierend zusammenwirkt.

Zur Abstützung des Lagerinnenrings 222 ist der Aufnahmezapfen 224 mit einer den Lagerinnenring 222 radial aufnehmenden Zentrierfläche 242 versehen und zusätzlich noch mit einem radial über die Zentrierfläche 242 nach außen überstehenden Stützflansch 244 auf einer der Stirnseite 232 des Lagerzapfens 230 zugewandten Seite den Lagerinnenring 222 mit einer Flanschfläche 246 abstützt.

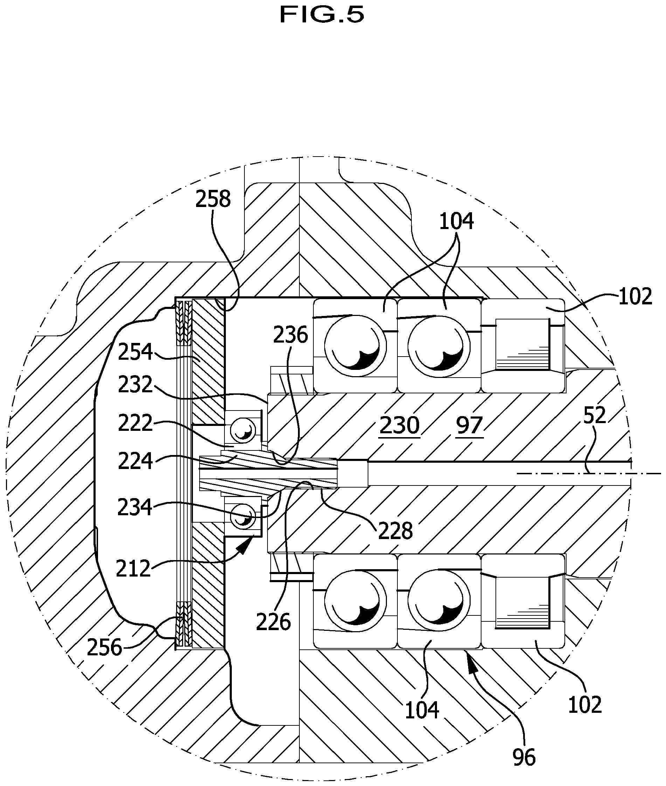

Ferner ist jedes der Stützlager 212, 214 mit einem Lageraußenring 252 versehen, auf welchen eine Druckscheibe 254 einwirkt, die auf einer der Flanschfläche 246 und somit beispielsweise auch der Stirnseite 232 des Lagerzapfens 230 gegenüberliegenden Seite des jeweiligen Stützlagers 212, 214, an diesem anliegt und ihrerseits, wie in Fig. 5 dargestellt, in dem Lagergehäuse 18 relativ zur jeweiligen Schraubenachse 52, 54 zentriert und in Richtung parallel zu den Schraubenachsen 52, 54 bewegbar geführt angeordnet ist.

Diese Druckscheibe 254 wird beaufschlagt durch einen Satz von Tellerfedern 256 die auf ihrer der Druckscheibe 254 abgewandten Seite ebenfalls in dem Lagergehäuse 18, insbesondere einem in diesem vorgesehenen Sitz 258 abgestützt sind und auf die Druckscheibe 254 so einwirken, dass diese das jeweilige Stützlager 212, 214 im Bereich des Lageraußenrings 252 in Richtung des Lagerzapfens 230 beaufschlagt, so dass insgesamt durch die jeweiligen Stützlager 212, 214 jeder der Schraubenläufer 36, 38 mit einer parallel zu der jeweiligen Schraubenachse 52, 54 wirkenden Kraft beaufschlagt ist, die in den Richtungen 112, 114 wirkt.

Die erfindungsgemäße Lösung, beispielsweise unter Verwendung des in den jeweiligen Lagerzapfen 230 stirnseitig eingesetzten Aufnahmezapfens 224, ermöglicht es somit, die Stützlager 212, 214 wesentlich kleiner zu dimensionieren als die jeweils radial auf dem Zapfenabschnitt 93, 95, 97, 99 des jeweiligen Lagerzapfens 230 aufsitzenden radial wirksamen Lager 104, so dass eine räumlich vorteilhafte Lösung geschaffen ist.

Insbesondere sind die Stützlager 212, 214 so dimensioniert, dass deren Größe, beispielsweise der Außendurchmesser der Lageraußenringe 252 kleiner ist als ein Durchmesser des Lagerzapfens 230 und insbesondere im Bereich von ungefähr 15 % bis ungefähr 80 % der Größe der axial wirksamen Lager 104 liegt.

Ferner sind die durch das Tellerfederpaket 256 erzeugten Kräfte in den Richtungen 112 und 114 so gewählt, dass sie im Bereich von ungefähr 2 % bis ungefähr 30 % der im Normalbetrieb der Expansion-/Kompressionsmaschine auf die Schraubenläufer 36, 38 wirkenden Kräfte Liegen.

Die vorstehend beschriebene Expansions-/Kompressionsmaschine kann in vereinfachter Form auch nur mit einem der Stützlager 212, 214 versehen sein, wobei im Fall einer Expansionsmaschine vorzugsweise das Stützlager 214 vorhanden ist und im Fall einer Kompressionsmaschine vorzugsweise das Stützlager 212 vorgesehen ist.

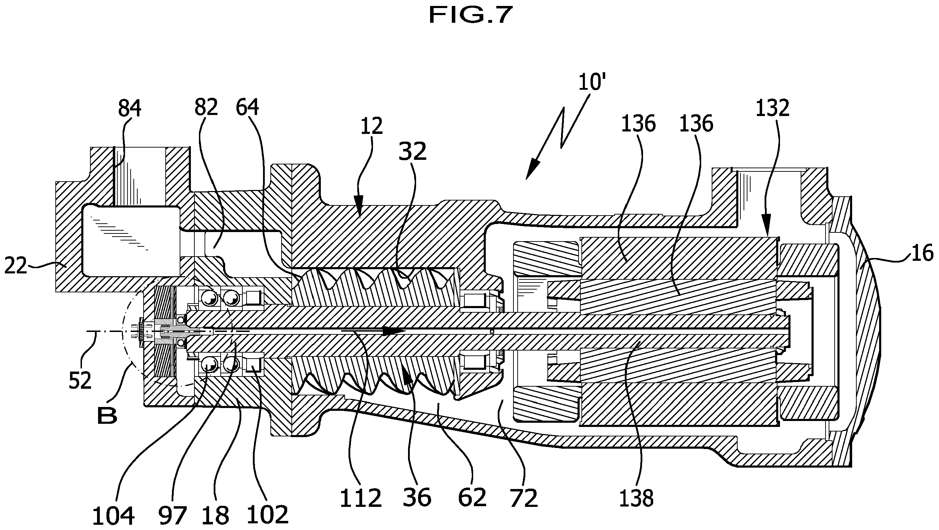

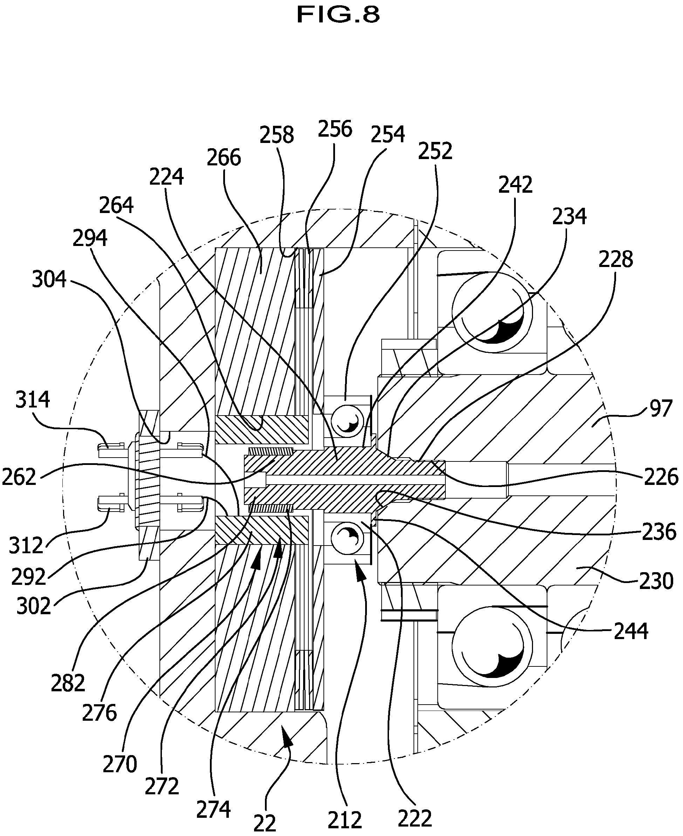

Bei einem zweiten Ausführungsbeispiel einer erfindungsgemäßen Expansions-/Kompressionsmaschine, dargestellt in den Fig. 7 und 8 sind in gleicher Weise wie beim ersten Ausführungsbeispiel den Schraubenläufern 36, 38 axiale Stützlager 212, 214 zugeordnet, welche die Schraubenläufer 36, 38 gegen eine Bewegung von der Niederdruckseite 62 zur Hochdruckseite 64 abstützen und eine Mindestgröße des Dichtspalts aufrechterhalten, wie bereits im Zusammenhang mit dem ersten Ausführungsbeispiel beschrieben, auf welches, insoweit als dieselben Elemente mit denselben Bezugszeichen versehen sind, vollinhaltlich Bezug genommen wird.

Im Gegensatz zum ersten Ausführungsbeispiel ist allerdings der Aufnahmezapfen 224 mit einem Fortsatz 262 versehen, welcher sich von dem hochdruckseitigen Lagerzapfen 230 des Schraubenläufers 36 weg erstreckt und dabei sowohl die Druckscheibe 254 als auch den Satz von Tellerfedern 256 in einem zentralen Bereich insbesondere berührungslos durchsetzt und in einen Freiraum 264 eines Stützkörpers 266 für den Satz von Tellerfedern 256 eingreift.

Dabei kann der Stützkörper 266 entweder, wie in Fig. 8 dargestellt, ein separates, in den Lagergehäusedeckel 22 eingesetztes Teil sein und zusammen mit dem Lagergehäusedeckel 22 den Sitz 258 für die Abstützung des Satzes von Tellerfedern 256 bilden oder einstückig in dem Lagergehäusedeckel 22 ausgebildet sein.

In dem Freiraum 264 ist ein als Ganzes mit 270 bezeichneter Drehzahlsensor angeordnet, welcher mit dem sich proportional zur Drehzahl des hochdruckseitigen Lagerzapfens 230 des Schraubenläufers 36 drehenden Aufnahmezapfen 224 gekoppelt ist.

Insbesondere bildet der Drehzahlsensor 270 einen elektrischen Sensorgenerator 272, welcher einen Sensorrotor 274 mit permanenter Magnetisierung aufweist, der mit einem Statorwicklungen aufweisenden Stator 276 zusammenwirkt, wobei der Sensorrotor 274 auf einem von dem Fortsatz 262 gebildeten Rotorträger 282 festsitzend angeordnet ist, so dass insgesamt der Sensorrotor 274 aufgrund der drehfesten Verbindung des Aufnahmezapfens 224 mit dem Lagerzapfen 230 mit derselben Drehzahl wie der Schraubenläufer 36 rotiert, während der Stator 276 festsitzend an dem Lagergehäuse 18, insbesondere in dem Stützkörper 266, angeordnet ist.

Die Statorwicklungen des Stators 276 sind dabei über Verbindungsleitungen 292, 294 mit einer Anschlussdurchführung 302 verbunden, welche in einem Durchbruch 304 des Lagergehäuses 18 angeordnet ist und diesen verschließt, so dass für den Anschluss der Statorwicklungen des Stators 276 des Drehzahlsensors 270 zwei außerhalb des Lagergehäuses 18 liegende Kontakte 312 und 314 zur Verfügung stehen, welche mit den zu den Statorwicklungen des Stators 276 führenden Leitungen 292, 294 verbunden sind.

Dadurch, dass der den Drehzahlsensor 270 bildende Sensorgenerator 272 einen Sensorrotor 274 mit permanenter Magnetisierung aufweist, erzeugt der Drehzahlsensor 270 als Sensorsignal eine zur Drehzahl des Schraubenläufers 36 proportionale, insbesondere streng proportionale, Spannung.

Vorzugsweise ist dabei der Sensorgenerator 272 mit dem Sensorrotor 274 und dem Stator 276 so ausgelegt, dass dieser dann, wenn der Schraubenläufer 36 mit der mit 132 bezeichnete elektrische Motor-/Generatoreinheit gekoppelt ist, welche mit einer Wechselspannung mit einer Frequenz betrieben ist, die einer Netzfrequenz eines mit der Motor-/Generatoreinheit 132 gekoppelten elektrischen Versorgungsnetzes 320 entspricht, beispielsweise bei 50 Hz oder 60 Hz, als Sensorsignal eine elektrische Spannung erzeugt, die unterhalb von 48 V liegt, jedoch vorzugsweise im Bereich zwischen 30 V und 48 V, noch besser im Bereich zwischen 40 V und 48 V liegt, um die Drehzahl des Schraubenläufer 36, insbesondere der gemeinsamen Antriebswelle 138, im Bereich der relevanten Netzfrequenz einerseits möglichst präzise, das heißt durch ein Sensorsignal mit einer möglichst hohen Spannung, messen zu können, andererseits aber die Verwendung von Hochspannungskomponenten, die bei Spannungen über 48 V einzusetzen wären, vermieden wird.

Eine besonders vorteilhafte Lösung sieht vor, dass der Sensorgenerator 272 ein Standardgenerator mit permanentmagnetisiertem Rotor 274 ist.

Insbesondere kann dabei die vom Sensorgenerator 272 erzeugte Spannung entweder eine AC-Spannung oder eine DC-Spannung sein, die jeweils direkt, das heißt ohne elektrische Umsetzung gemessen werden kann.

Somit lässt sich sowohl bei einem Einsatz der erfindungsgemäßen Maschine zum Expandieren von im Wesentlichen gasförmigen Medien als auch bei Einsatz der erfindungsgemäßen Maschine zum Komprimieren von im Wesentlichen gasförmigen Medien mit dem Drehzahlsensor 270 in vorteilhafter Weise die Drehzahl der als Ganzes mit 132 bezeichneten elektrischen Motor-/Generatoreinheit erfassen.

## Patentansprüche

1. Maschine zum Entspannen oder Komprimieren von im Wesentlichen gasförmigen Medien, umfassend ein Maschinengehäuse (10) und mindestens einen in dem Maschinengehäuse (10) in einer Schraubenläuferbohrung (32, 34) angeordneten und sich zwischen einer Niederdruckseite (62) und einer Hochdruckseite (64) der Schraubenläuferbohrung (32, 34) erstreckenden sowie mit dem im Wesentlichen gasförmigen Medium zusammenwirkenden Schraubenläufer (36, 38), welcher durch Rotation um eine Schraubenachse (52, 54) entweder das im Wesentlichen gasförmige Medium von der Niederdruckseite (62) zur Hochdruckseite (64) fördert und dabei komprimiert oder von der Hochdruckseite (64) zur Niederdruckseite (62) fördert und dabei expandiert und welcher im Maschinengehäuse (10) beiderseits mittels jeweils einem Lagersatz (92, 94, 96, 98) gelagert ist, wobei jeder Lagersatz (92, 94, 96, 98) mindestens ein Radiallager (102) und mindestens einer der Lagersätze (96, 98) mindestens ein axial wirkendes Lager (104) aufweist, welches den mindestens einen Schraubenläufer (36, 38) axial gegen eine axiale Verschiebebewegung aus seiner Betriebsposition in Richtung (112, 114) der Niederdruckseite (62) abstützt, sowie eine mit dem mindestens einen Schraubenläufer (36, 38) gekoppelte oder koppelbare Motor-/Generatoreinheit (132),
wobei der mindestens eine Schraubenläufer (36, 38) mit mindestens einem axialen Stützlager (212, 214) versehen ist, welches den mindestens einen Schraubenläufer (36, 38) derart axial abstützt, dass eine hochdruckseitige Stirnseite (122, 124) des mindestens einen Schraubenläufers (36, 38) berührungsfrei zu einer dieser Stirnseite (122, 124) zugewandten Stirnwand (126, 128) des den mindestens einen Schraubenläufer (36, 38) aufnehmenden Maschinengehäuses (10) geführt ist, **dadurch gekennzeichnet, dass** das mindestens eine Stützlager (212, 214) an einem Aufnahmezapfen (224) angeordnet ist und dass der Aufnahmezapfen (224) in das Ende eines Lagerzapfens (230) eingesetzt ist.

2. Maschine nach Anspruch 1, **dadurch gekennzeichnet, dass** das mindestens eine Stützlager (212, 214) in dem Maschinengehäuse (10) in axialer Richtung bewegbar und in Richtung der Niederdruckseite (62) kraftbeaufschlagt angeordnet ist, dass insbesondere das mindestens eine Stützlager (212, 214) in axialer Richtung derart auf den Schraubenläufer (36, 38) einwirkt, dass das axial wirkende Lager (104) durch das Stützlager (212, 214) in Richtung der Niederdruckseite ständig vorgespannt ist, dass insbesondere das mindestens eine Stützlager (212, 214) mit einer in der axialen Richtung wirkenden elastischen Federkraft beaufschlagt ist, so dass die Federkraft auf den mindestens einen Schraubenläufer (36, 38) in Richtung (112, 114) der Niederdruckseite (62) wirkt, dass insbesondere das mindestens eine Stützlager (212, 214) durch ein Tellerfederpaket (256) beaufschlagt ist.

3. Maschine nach einem der voranstehenden Ansprüche, **dadurch gekennzeichnet, dass** das mindestens eine Stützlager (212, 214) auf einen den mindestens einen Schraubenläufers (36, 38) lagernden Lagerzapfen (230) einwirkt, dass insbesondere das mindestens eine Stützlager (212, 214) auf den auf der der Motor-/Generatoreinheit (132) abgewandten Seite des mindestens einen Schraubenläufers (36, 38) angeordneten Lagerzapfen (230) wirkt, dass insbesondere das mindestens eine Stützlager (212, 214) in einem der Motor-/Generatoreinheit abgewandt angeordneten Lagergehäuse (18) des Maschinengehäuses (10) angeordnet ist, dass insbesondere das mindestens eine Stützlager (212, 214) auf einen über die hochdruckseitige Stirnseite des Schraubenläufers (36, 38) überstehenden Lagerzapfen (230) einwirkt.

4. Maschine nach einem der voranstehenden Ansprüche, **dadurch gekennzeichnet, dass** der Aufnahmezapfen (224) an einem Ende des Lagerzapfens (230) angeordnet ist.

5. Maschine nach einem der voranstehenden Ansprüche, **dadurch gekennzeichnet, dass** der Aufnahmezapfen (224) eine Flanschfläche (246) aufweist, auf welche das Stützlager (212, 214) wirkt.

6. Maschine nach einem der voranstehenden Ansprüche, **dadurch gekennzeichnet, dass** der Aufnahmezapfen (224) relativ zu dem Lagerzapfen (230) durch einen Zentrierkonus (234, 236) zentriert ist.

7. Maschine nach einem der voranstehenden Ansprüche, **dadurch gekennzeichnet, dass** der Aufnahmezapfen einen geringeren Durchmesser aufweist als ein den jeweiligen Lagersatz (92, 94, 96, 98), insbesondere das Radiallager (102) und/oder das axial wirkende Lager (104), tragender Zapfenabschnitt (93, 95, 97, 99) des Lagerzapfens (230).

8. Maschine nach einem der voranstehenden Ansprüche, **dadurch gekennzeichnet, dass** das mindestens eine Stützlager (212, 214) so dimensioniert ist, dass die von diesem aufzunehmenden Stützkräfte im Bereich von 10 % bis 80 % der Stützkräfte des axial wirkenden Lagers (104) liegen.

9. Maschine nach einem der voranstehenden Ansprüche, **dadurch gekennzeichnet, dass** das mindestens eine Stützlager (212, 214) bezogen auf die jeweilige Schraubenachse (52, 54) eine radiale Ausdehnung aufweist, die im Bereich von 10 % bis 80 % der radialen Ausdehnung des axial wirkenden Lagers (104) liegt.

10. Maschine nach einem der voranstehenden Ansprüche, **dadurch gekennzeichnet, dass** das mindestens eine Stützlager (212, 214) einen Lagerinnendurchmesser aufweist, der kleiner ist als ein Innendurchmesser des axial wirkenden Lagers (104) des jeweiligen Lagersatzes (92, 94, 96, 98).

11. Maschine nach einem der voranstehenden Ansprüche, **dadurch gekennzeichnet, dass** das mindestens eine Stützlager (212, 214) einen Lagerinnendurchmesser aufweist, der kleiner ist als ein Innendurchmesser des Radiallagers (102) der Lagersätze (92, 94, 96, 98).

12. Maschine nach einem der voranstehenden Ansprüche, **dadurch gekennzeichnet, dass** die Maschine mit einem Drehzahlsensor (270) versehen ist, welcher mit einer sich proportional zu einem der Schraubenläufer (36, 38) drehenden Welle (97, 99) gekoppelt ist und welcher als elektrischer Sensorgenerator (272) ausgebildet ist, der ein elektrisches Sensorsignal erzeugt.

13. Maschine nach Anspruch 12, **dadurch gekennzeichnet, dass** der elektrische Sensorgenerator (272) als Sensorsignal eine elektrische Spannung erzeugt, dass insbesondere der Sensorgenerator (272) in einem Maschinengehäuse (10) der Maschine angeordnet und insbesondere in diesem dem Arbeitsmedium und/oder Schmiermittel ausgesetzt ist, dass insbesondere der Sensorgenerator (272) einen Sensorrotor (274) mit permanenter Magnetisierung aufweist, der mit einem Statorwicklungen aufweisenden Stator (276) zusammenwirkt, wobei bei sich drehendem Sensorrotor (274) an den Statorwicklungen des Stators (276) eine von der Drehzahl des Sensorrotors (274) abhängige Spannung auftritt, welche das Sensorsignal darstellt, dass insbesondere der Sensorrotor (274) zur Realisierung der permanenten Magnetisierung ein Seltene Erden umfassendes Magnetmaterial aufweist.

14. Maschine nach einem der voranstehenden Ansprüche 12 oder 13, **dadurch gekennzeichnet, dass** der Sensorgenerator (272) so ausgelegt ist, dass er bei einer Drehzahl der Motor-/Generatoreinheit (132) welche zu einer Frequenz der Wechselspannung führt, die im Bereich einer Netzfrequenz eines mit der Motor-/Generatoreinheit gekoppelten Versorgungsnetzes liegt, eine Spannung im Bereich zwischen 30 V und 48 V, vorzugsweise zwischen 40 V und 48 V erzeugt.

15. Maschine nach einem der Ansprüche 13 bis 14, **dadurch gekennzeichnet, dass** der Sensorrotor (274) des Sensorgenerators (272) direkt mit einem Wellenende (97, 99) drehfest gekoppelt und von diesem getragen ist.

16. Maschine nach einem der Ansprüche 13 iS- bis 15, **dadurch gekennzeichnet, dass** der Sensorrotor (274) des Sensorgenerators (272) auf einem mit einem Lagerzapfen (230) des Schraubenläufers (36) verbundenen Rotorträger (282) angeordnet ist, dass insbesondere der Rotorträger (282) mittels einer Zentrierschraube (134) mit dem Wellenende (97) oder mit dem Lagerapfen (230) verbunden ist, dass insbesondere der Rotorträger (282) mittels eines Zentrierkonus (234, 236) relativ zu dem Wellenende (97) oder dem Lagerzapfen (230) zentriert ist.

17. Maschine nach einem der Ansprüche 13 bis 16, **dadurch gekennzeichnet, dass** der mit dem Sensorrotor (274) des Sensorgenerators (272) gekoppelte und diesen tragende Lagerzapfen (230) von einem Lager (96, 98) zentriert geführt ist, dass insbesondere das Wellenende (97) oder der Lagerzapfen (230) von dem dieses zentriert führenden Lager (96, 98) maximal über eine Distanz von dem Lager (96, 98) weg erstreckt, welche einem Durchmesser des Wellenendes (97) oder Lagerzapfens (230) entspricht.

18. Maschine nach einem der Ansprüche 12 bis 17, **dadurch gekennzeichnet, dass** der Sensorgenerator (272) in einem hochdruckseitigen Lagergehäuse (18) angeordnet ist.

19. Maschine nach einem der Ansprüche 13 bis 18, **dadurch gekennzeichnet, dass** der Stator (276) des Sensorgenerators (270) stationär an einem Gehäuseelement (22) des Maschinengehäuses (10), insbesondere an einem vom Maschinengehäuse (10) demontierbaren Gehäuseelement (22), gehalten ist, dass insbesondere das Gehäuseelement (22) mit einer elektrischen Anschlussdurchführung (302) versehen ist.

20. Maschine nach einem der Ansprüche 13 bis 19, **dadurch gekennzeichnet, dass** der Sensorrotor (274) des Sensorgenerators (272) mit einem mit dem mindestens einen Schraubenläufer (36, 38) gekoppelten Lagerring (222) des entsprechenden Stützlagers (212, 214) drehfest gekoppelt ist.

21. Maschine nach einem der Ansprüche 13 bis 20, **dadurch gekennzeichnet, dass** der Sensorrotor (274) des Sensorgenerators (272) mit einem Lagerzapfen (230) drehfest gekoppelt ist, auf welchen das mindestens eine Stützlager (212, 214) einwirkt.

## Claims

1. A machine for depressurizing or compressing substantially gaseous media, comprising: a machine casing (10); at least one screw rotor (36, 38), which is arranged in a screw rotor bore (32, 34) in the machine casing (10), extends between a low-pressure side (62) and a high-pressure side (64) of the screw rotor bore (32, 34), cooperates with the substantially gaseous medium and, by rotating about a screw axis (52, 54), conveys the substantially gaseous medium either from the low-pressure side (62) to the high-pressure side (64), compressing it, or from the high-pressure side (64) to the low-pressure side (62), expanding it, and is mounted on both sides in the machine casing (10) by means of a respective bearing set (92, 94, 96, 98), wherein each bearing set (92, 94, 96, 98) has at least one radial bearing (102) and at least one of the bearing sets (96, 98) has at least one axially acting bearing (104) that supports the at least one screw rotor (36, 38) axially to counter an axial displacing movement from its operating position in the direction (112, 114) of the low-pressure side (62); and a motor/generator unit (132) that is coupled or couplable to the at least one screw rotor (36, 38),
wherein the at least one screw rotor (36, 38) is provided with at least one axial support bearing (212, 214) that axially supports the at least one screw rotor (36, 38) such that a high-pressure end face (122, 124) of the at least one screw rotor (36, 38) is guided, without making contact, to an end wall (126, 128), which faces this end face (122, 124), of the machine casing (10) that receives the at least one screw rotor (36, 38), **characterized in that** the at least one support bearing (212, 214) is arranged on a receiving pin (224), and **in that** the receiving pin (224) is inserted into the end of a bearing pin (230).

2. A machine according to Claim 1, **characterized in that** the at least one support bearing (212, 214) is arranged to be movable in the axial direction in the machine casing (10) and such that it is urged by force in the direction of the low-pressure side (62), **in that** in particular the at least one support bearing (212, 214) acts on the screw rotor (36, 38) in the axial direction such that the axially acting bearing (104) is constantly biased in the direction of the low-pressure side by the support bearing (212, 214), **in that** in particular the at least one support bearing (212, 214) is urged by a resilient spring force acting in the axial direction, such that the spring force acts on the at least one screw rotor (36, 38) in the direction (112, 114) of the low-pressure side (62), **in that** in particular the at least one support bearing (212, 214) is urged by a disk spring set (256).

3. A machine according to one of the preceding claims, **characterized in that** the at least one support bearing (212, 214) acts on a bearing pin (230) on which the at least one screw rotor (36, 38) is mounted, **in that** in particular the at least one support bearing (212, 214) acts on the bearing pin (230) that is arranged on the side of the at least one screw rotor (36, 38) that is remote from the motor/generator unit (132), **in that** in particular the at least one support bearing (212, 214) is arranged in a bearing casing (18) of the machine casing (10) that is arranged such that it is remote from the motor/generator unit, **in that** in particular the at least one support bearing (212, 214) acts on a bearing pin (230) that projects beyond the end face of the screw rotor (36, 38) on the high-pressure side.

4. A machine according to one of the preceding claims, **characterized in that** the receiving pin (224) is arranged at an end of the bearing pin (230).

5. A machine according to one of the preceding claims, **characterized in that** the receiving pin (224) has a flange face (246) on which the support bearing (212, 214) acts.

6. A machine according to one of the preceding claims, **characterized in that** the receiving pin (224) is centred in relation to the bearing pin (230) by a centring cone (234, 236).

7. A machine according to one of the preceding claims, **characterized in that** the receiving pin has a smaller diameter than a pin section (93, 95, 97, 99) of the bearing pin (230) that carries the respective bearing set (92, 94, 96, 98), in particular the radial bearing (102) and/or the axially acting bearing (104).

8. A machine according to one of the preceding claims, **characterized in that** the at least one support bearing (212, 214) is dimensioned such that the support forces to be taken up thereby are in the range of from 10% to 80% of the support forces of the axially acting bearing (104).

9. A machine according to one of the preceding claims, **characterized in that** the at least one support bearing (212, 214) has, in relation to the respective screw axis (52, 54), a radial extent in the range of from 10% to 80% of the radial extent of the axially acting bearing (104).

10. A machine according to one of the preceding claims, **characterized in that** the at least one support bearing (212, 214) has a bearing internal diameter that is smaller than an internal diameter of the axially acting bearing (104) of the respective bearing set (92, 94, 96, 98).

11. A machine according to one of the preceding claims, **characterized in that** the at least one support bearing (212, 214) has a bearing internal diameter that is smaller than an internal diameter of the radial bearing (102) of the bearing sets (92, 94, 96, 98).

12. A machine according to one of the preceding claims, **characterized in that** the machine is provided with a rotational speed sensor (270) that is coupled to a shaft (97, 99) rotating proportionally to one of the screw rotors (36, 38) and that takes the form of an electrical sensor generator (272) generating an electrical sensor signal.

13. A machine according to Claim 12, **characterized in that** the electrical sensor generator (272) generates, as the sensor signal, an electrical voltage, **in that** in particular the sensor generator (272) is arranged in a machine casing (10) of the machine and is exposed in particular therein to the working medium and/or lubricant, **in that** in particular the sensor generator (272) has a permanently magnetized sensor rotor (274) that cooperates with a stator (276) having stator windings, wherein, during rotation of the sensor rotor (274), there is produced at the stator windings of the stator (276) a voltage that is dependent on the speed of the sensor rotor (274) and represents the sensor signal, **in that** in particular, for the purpose of achieving the permanent magnetization, the sensor rotor (274) has a magnet material comprising rare earth elements.

14. A machine according to one of preceding Claims 12 or 13, **characterized in that** the sensor generator (272) is configured such that, at a speed of rotation of the motor/generator unit (132) that results in a frequency of the AC voltage lying in the range of a grid frequency of a power supply coupled to the motor/generator unit, it generates a voltage in the range between 30 V and 48 V, preferably between 40 V and 48 V.

15. A machine according to one of Claims 13 to 14, **characterized in that** the sensor rotor (274) of the sensor generator (272) is coupled directly and non-rotatably to a shaft end (97, 99) and is carried by it.

16. A machine according to one of Claims 13 to 15, **characterized in that** the sensor rotor (274) of the sensor generator (272) is arranged on a rotor carrier (282) that is connected to a bearing pin (230) of the screw rotor (36), **in that** in particular the rotor carrier (282) is connected to the shaft end (97) or the bearing pin (230) by means of a centring screw (134), **in that** in particular the rotor carrier (282) is centred in relation to the shaft end (97) or the bearing pin (230) by means of a centring cone (234, 236).

17. A machine according to one of Claims 13 to 16, **characterized in that** the bearing pin (230) that is coupled to and carries the sensor rotor (274) of the sensor generator (272) is guided such that it is centred by a bearing (96, 98), **in that** in particular the shaft end (97) or the bearing pin (230) extends from the bearing (96, 98) that guides it in centred manner at most over a distance from the bearing (96, 98) that corresponds to a diameter of the shaft end (97) or the bearing pin (230).

18. A machine according to one of Claims 12 to 17, **characterized in that** the sensor generator (272) is arranged in a bearing casing (18) on the high-pressure side.

19. A machine according to one of Claims 13 to 18, **characterized in that** the stator (276) of the sensor generator (270) is held stationary on a casing element (22) of the machine casing (10), in particular a casing element (22) that is configured to be demounted from the machine casing (10), **in that** in particular the casing element (22) is provided with an electrical terminal feedthrough (302).

20. A machine according to one of Claims 13 to 19, **characterized in that** the sensor rotor (274) of the sensor generator (272) is non-rotatably coupled to a bearing ring (222) of the corresponding support bearing (212, 214) that is coupled to the at least one screw rotor (36, 38).

21. A machine according to one of Claims 13 to 20, **characterized in that** the sensor rotor (274) of the sensor generator (272) is non-rotatably coupled to a bearing pin (230) on which the at least one support bearing (212, 214) acts.

## Revendications

1. Machine de détente ou de compression de milieux sensiblement gazeux, comprenant un boîtier de machine (10) et au moins un rotor à vis (36, 38) agencé dans le boîtier de machine (10) dans un perçage de rotor à vis (32, 34) et s'étendant entre un côté basse pression (62) et un côté haute pression (64) du perçage de rotor à vis (32, 34) ainsi que coagissant avec le milieu sensiblement gazeux, rotor qui transporte et comprime par rotation autour d'un axe de vis (52, 54) le milieu sensiblement gazeux du côté basse pression (62) au côté haute pression (64) ou le transporte et le détend du côté haute pression (64) au côté basse pression (62) et qui est logé dans le boîtier de machine (10) de part et d'autre au moyen respectivement d'un ensemble de palier (92, 94, 96, 98), dans laquelle chaque ensemble de palier (92, 94, 96, 98) présente au moins un palier radial (102) et au moins un des ensembles de palier (96, 98) présente au moins un palier (104) agissant axialement qui appuie l'au moins un rotor à vis (36, 38) axialement contre un mouvement coulissant axial de sa position de fonctionnement en direction (112, 114) du côté basse pression (62), ainsi qu'une unité de moteur/générateur (132) couplée ou pouvant être couplée à l'au moins un rotor à vis (36, 38),
dans laquelle l'au moins un rotor à vis (36, 38) est pourvu d'au moins un palier d'appui (212, 214) axial qui appuie axialement l'au moins un rotor à vis (36, 38) de telle manière qu'un côté avant (122, 124) côté haute pression de l'au moins un rotor à vis (36, 38) soit guidé sans contact vers une paroi avant (126, 128) tournée vers ce côté avant (122, 124) du boîtier de machine (10) recevant l'au moins un rotor à vis (36, 38), **caractérisée en ce que** l'au moins un palier d'appui (212, 214) est agencé au niveau d'un tenon de réception (224) et **en ce que** le tenon de réception (224) est inséré dans l'extrémité d'un tourillon (230).

2. Machine selon la revendication 1, **caractérisée en ce que** l'au moins un palier d'appui (212, 214) est agencé de manière mobile dans le boîtier de machine (10) dans le sens axial et sollicité par la force en direction du côté basse pression (62), qu'en particulier l'au moins un palier d'appui (212, 214) agit dans le sens axial sur le rotor à vis (36, 38) de telle manière que le palier (104) agissant axialement soit précontraint en continu par le palier d'appui (212, 214) en direction du côté basse pression, **en ce qu'**en particulier l'au moins un palier d'appui (212, 214) est sollicité avec une force de ressort élastique agissant dans le sens axial de sorte que la force de ressort agisse sur l'au moins un rotor à vis (36, 38) en direction (112, 114) du côté basse pression (62), **en ce qu'**en particulier l'au moins un palier d'appui (212, 214) est alimenté par un paquet de ressort à disques (256).

3. Machine selon l'une quelconque des revendications précédentes, **caractérisée en ce que** l'au moins un palier d'appui (212, 214) agit sur un tourillon (230) logeant l'au moins un rotor à vis (36, 38), **en ce qu'**en particulier l'au moins un palier d'appui (212, 214) agit sur le tourillon (230) agencé sur le côté éloigné de l'unité de moteur/générateur (132) de l'au moins un rotor à vis (36, 38), **en ce qu'**en particulier l'au moins un palier d'appui (212, 214) est agencé dans un boîtier de palier (18) agencé de manière éloignée de l'unité de moteur/générateur du boîtier de machine (10), **en ce qu'**en particulier l'au moins un palier d'appui (212, 214) agit sur un tourillon (230) dépassant du côté avant côté haute pression du rotor à vis (36, 38).

4. Machine selon l'une quelconque des revendications précédentes, **caractérisée en ce que** le tenon de réception (224) est agencé à une extrémité du tourillon (230).

5. Machine selon l'une quelconque des revendications précédentes, **caractérisée en ce que** le tenon de réception (224) présente une surface de bride (246), sur laquelle agit le palier d'appui (212, 214).

6. Machine selon l'une quelconque des revendications précédentes, **caractérisée en ce que** le tenon de réception (224) est centré par rapport au tourillon (230) par un cône de centrage (234, 236).

7. Machine selon l'une quelconque des revendications précédentes, **caractérisée en ce que** le tenon de réception présente un diamètre plus faible qu'une section de tenon (93, 95, 97, 99) du tourillon (230) portant l'ensemble de palier (92, 94, 96, 98) respectif, en particulier le palier radial (102) et/ou le palier (104) agissant axialement.

8. Machine selon l'une quelconque des revendications précédentes, **caractérisée en ce que** l'au moins un palier d'appui (212, 214) est dimensionné de sorte que les forces d'appui à recevoir par celui-ci se trouvent dans la plage de 10 % à 80 % des forces d'appui du palier (104) agissant axialement.

9. Machine selon l'une quelconque des revendications précédentes, **caractérisée en ce que** l'au moins un palier d'appui (212, 214) présente par rapport à l'axe de vis (52, 54) respectif un étirement radial qui se trouve dans la plage de 10 % à 80 % de l'étirement radial du palier (104) agissant axialement.

10. Machine selon l'une quelconque des revendications précédentes, **caractérisée en ce que** l'au moins un palier d'appui (212, 214) présente un diamètre intérieur de palier qui est inférieur à un diamètre intérieur du palier (104) agissant axialement de l'ensemble de palier (92, 94, 96, 98) respectif.

11. Machine selon l'une quelconque des revendications précédentes, **caractérisée en ce que** l'au moins un palier d'appui (212, 214) présente un diamètre intérieur de palier qui est inférieur à un diamètre intérieur du palier radial (102) des ensembles de palier (92, 94, 96, 98).

12. Machine selon l'une quelconque des revendications précédentes, **caractérisée en ce que** la machine est pourvu d'un capteur de vitesse de rotation (270) qui est couplé à un arbre (97, 99) tournant proportionnellement à un des rotors à vis (36, 38) et qui est réalisé comme générateur de capteur (272) électrique qui génère un signal de capteur électrique.

13. Machine selon la revendication 12, **caractérisée en ce que** le générateur de capteur (272) électrique génère comme signal de capteur une tension électrique, **en ce qu'**en particulier le générateur de capteur (272) est agencé dans un boîtier de machine (10) de la machine et **en ce qu'**en particulier est exposé dans celui-ci au milieu de travail et/ou lubrifiant, **en ce qu'**en particulier le générateur de capteur (272) présente un rotor de capteur (274) avec une magnétisation permanente qui coagit avec un stator (276) présentant des enroulements de stator, dans laquelle en cas de rotor de capteur (274) tournant, une tension dépendant de la vitesse de rotation du rotor de capteur (274) survient au niveau des enroulements de stator du stator (276), laquelle représente le signal de capteur, **en ce qu'**en particulier le rotor de capteur (274) présente pour la réalisation de la magnétisation permanente un matériau magnétique comprenant des terres rares.

14. Machine selon l'une quelconque des revendications précédentes 12 ou 13, **caractérisée en ce que** le générateur de capteur (272) est conçu de sorte qu'il génère pour une vitesse de rotation de l'unité de moteur/générateur (132) qui mène à une fréquence de la tension alternative qui se trouve dans la plage d'une fréquence de réseau d'un réseau d'alimentation couplé à l'unité de moteur/générateur, une tension dans la plage entre 30 V et 48 V, de préférence entre 40 V et 48 V.

15. Machine selon l'une quelconque des revendications 13 à 14, **caractérisée en ce que** le rotor de capteur (274) du générateur de capteur (272) est couplé sans pouvoir tourner directement à une extrémité d'arbre (97, 99) et porté par celle-ci.

16. Machine selon l'une quelconque des revendications 13 à 15, **caractérisée en ce que** le rotor de capteur (274) du générateur de capteur (272) est agencé sur un support de rotor (282) relié à un tourillon (230) du rotor à vis (36), **en ce qu'**en particulier le support de rotor (282) est relié au moyen d'une vis de centrage (134) à l'extrémité d'arbre (97) ou au tourillon (230), **en ce qu'**en particulier le support de rotor (282) est centré au moyen d'un cône de centrage (234, 236) par rapport à l'extrémité d'arbre (97) ou au tourillon (230).

17. Machine selon l'une quelconque des revendications 13 à 16, **caractérisée en ce que** le tourillon (230) couplé au rotor de capteur (274) du générateur de capteur (272) et portant celui-ci est guidé de manière centrée par un palier (96, 98), **en ce qu'**en particulier l'extrémité d'arbre (97) ou le tourillon (230) s'étend du palier (96, 98) menant de manière centrée celle-ci au maximum sur une distance loin du palier (96, 98) qui correspond à un diamètre de l'extrémité d'arbre (97) ou du tourillon (230).

18. Machine selon l'une quelconque des revendications 12 à 17, **caractérisée en ce que** le générateur de capteur (272) est agencé dans un boîtier de palier (18) côté haute pression.

19. Machine selon l'une quelconque des revendications 13 à 18, **caractérisée en ce que** le stator (276) du générateur de capteur (270) est maintenu de manière stationnaire au niveau d'un élément de boîtier (22) du boîtier de machine (10), en particulier au niveau d'un élément de boîtier (22) démontable du boîtier de machine (10), **en ce qu'**en particulier l'élément de boîtier (22) est pourvu d'un passage de raccordement (302) électrique.

20. Machine selon l'une quelconque des revendications 13 à 19, **caractérisée en ce que** le rotor de capteur (274) du générateur de capteur (272) est couplé sans pouvoir tourner à un anneau de palier (222) couplé à l'au moins un rotor à vis (36, 38) du palier d'appui (212, 214) correspondant.

21. Machine selon l'une quelconque des revendications 13 à 20, **caractérisée en ce que** le rotor de capteur (274) du générateur de capteur (272) est couplé sans pouvoir tourner à un tourillon (230), sur lequel l'au moins un palier d'appui (212, 214) agit.
